# EUROPEAN PATENT APPLICATION

(11) **EP 4 800 272 A1**
(43) Date of publication of application: **02.09.2026**
(21) Application number: 24884758.4
(22) Date of filing: 29.10.2024
(51) Int. Cl.: F16K 11/06

(54) **MULTI-WAY VALVE**

(30) Priority: 01.11.2023 CN 202322963813 U; 01.11.2023 CN 202322967677 U
(71) Applicant: Zhejiang Dunan Artificial Environment Co., Ltd., Shaoxing, Zhejiang 311835 (CN)
(72) Inventor: SHEN, Cancan, Shaoxing, Zhejiang 311835 (CN); CHEN, Yutao, Shaoxing, Zhejiang 311835 (CN); ZHOU, Xiaowei, Shaoxing, Zhejiang 311835 (CN); WANG, Shaofei, Shaoxing, Zhejiang 311835 (CN)
(74) Representative: Novagraaf Technologies
(86) International application number: PCT/CN2024/128273
(87) International publication number: WO 2025/092755

(57) **Abstract**

Provided is a multi-way valve. The multi-way valve includes a main body portion (10) and a valve core (20), where the main body portion is provided with a valve cavity and a plurality of flow ports; and the valve core is provided with a plurality of sector regions distributed in a circumferential direction, and the valve core is rotatably arranged in the valve cavity, to switch, through the different sector regions corresponding to the plurality of flow ports, the multi-way valve among a first operating condition, a second operating condition, a third operating condition, a fourth operating condition, a fifth operating condition, and a sixth operating condition. Through rotation of the valve core of the multi-way valve, the different sector regions correspond to the plurality of flow ports, and the different operating conditions of the multi-way valve are switched. A plurality of flow paths are controlled. Usage is convenient, and control is simple.

## Description

The present disclosure claims the benefit of priority to Patent Application No. 202322963813.8, filed with the China National Intellectual Property Administration on November 1, 2023 and entitled "Multi-way valve", and claims the benefit of priority to Patent Application No. 202322967677.X, filed with the China National Intellectual Property Administration on November 1, 2023 and entitled "Valve core component and multi-way valve".

### Technical Field

The present disclosure relates to the technical field of multi-way valves, and particularly relates to a multi-way valve.

### Background

Water valves are generally applied in family cars. Flow distribution is completed through the water valves, to control temperatures of batteries. Existing water valves of the family cars are three-way valves, four-way valves, or combinations of three-way valves and four-way valves. However, few operating conditions can be switched, pipelines are complex, and control procedures are complicated.

### Summary

Some embodiments of the present disclosure provide a multi-way valve, to solve the problem that a multi-way valve in the prior art is a proportional valve and is not suitable for switching conventional operating conditions.

To solve the above problem, some embodiments of the present disclosure provide a multi-way valve. The multi-way valve includes a main body portion, where the main body portion is provided with a valve cavity and a plurality of flow ports, and the plurality of flow ports include a first flow port, a second flow port, a third flow port, a fourth flow port, a fifth flow port, a sixth flow port, a seventh flow port, an eighth flow port, a ninth flow port, and a tenth flow port; and a valve core, wherein the valve core is provided with a plurality of sector regions, the plurality of sector regions include a first sector region, a second sector region, a third sector region, a fourth sector region, a fifth sector region, and a sixth sector region which are sequentially distributed in a circumferential direction of the valve core, and the valve core is rotatably arranged in the valve cavity, to switch, through the sector regions, the multi-way valve to any one of operating conditions as follows: a first operating condition, in which the first sector region directly faces the plurality of flow ports, the first flow port is in communication with the fourth flow port, the second flow port is in communication with the seventh flow port, the third flow port is in communication with the eighth flow port, the fifth flow port is in communication with the sixth flow port, and the ninth flow port is in communication with the tenth flow port; a second operating condition, in which the second sector region directly faces the plurality of flow ports, the first flow port is in communication with the ninth flow port, the second flow port is in communication with the tenth flow port, the third flow port is in communication with the fifth flow port, and the sixth flow port is in communication with the eighth flow port; a third operating condition, in which the third sector region directly faces the plurality of flow ports, the first flow port is in communication with the sixth flow port, the second flow port is in communication with the seventh flow port, and the ninth flow port is in communication with the tenth flow port; a fourth operating condition, in which the fourth sector region directly faces the plurality of flow ports, the first flow port is in communication with the sixth flow port, the second flow port is in communication with the tenth flow port, and the eighth flow port is in communication with the ninth flow port; a fifth operating condition, in which the fifth sector region directly faces the plurality of flow ports, the first flow port is in communication with the sixth flow port, the second flow port is in communication with the seventh flow port, the third flow port is in communication with the tenth flow port, and the fourth flow port is in communication with the ninth flow port; and a sixth operating condition, in which the sixth sector region directly faces the plurality of flow ports, the first flow port is in communication with the sixth flow port, the second flow port is in communication with the tenth flow port, and the seventh flow port is in communication with the ninth flow port.

Further, the valve core is provided with a plurality of circumferential regions. The plurality of circumferential regions include a first circumferential region, a second circumferential region, a third circumferential region, a fourth circumferential region, and a fifth circumferential region which are sequentially arranged in an axial direction of the valve core. The plurality of circumferential regions and the plurality of sector regions form a plurality of flow passages. The plurality of flow passages include a first flow passage I formed by the first sector region, the first circumferential region, and the second circumferential region; a first flow passage II formed by the first sector region, the first circumferential region, and the fifth circumferential region; a first flow passage III formed by the first sector region, the second circumferential region, and the third circumferential region; a first flow passage IV formed by the first sector region, the third circumferential region, and the fourth circumferential region; a first flow passage V formed by the first sector region, the fourth circumferential region, and the fifth circumferential region; a second flow passage I formed by the second sector region, the first circumferential region, and the second circumferential region; a second flow passage II formed by the second sector region, the second circumferential region, and the third circumferential region; a second flow passage III formed by the second sector region, the third circumferential region, and the fourth circumferential region; a second flow passage IV formed by the second sector region, the first circumferential region, and the fourth circumferential region; a third flow passage I formed by the third sector region and the first circumferential region; a third flow passage II formed by the third sector region, the second circumferential region, and the third circumferential region; a third flow passage III formed by the third sector region, the fourth circumferential region, and the fifth circumferential region; a fourth flow passage I formed by the fourth sector region and the first circumferential region; a fourth flow passage II formed by the fourth sector region, the second circumferential region, and the fourth circumferential region; a fourth flow passage III formed by the fourth sector region, the third circumferential region, and the fourth circumferential region; a fifth flow passage I formed by the fifth sector region and the first circumferential region; a fifth flow passage II formed by the fifth sector region and the third circumferential region; a fifth flow passage III formed by the fifth sector region, the second circumferential region, and the fifth circumferential region; a fifth flow passage IV formed by the fifth sector region, the fourth circumferential region, and the fifth circumferential region; a sixth flow passage I formed by the sixth sector region and the first circumferential region; a sixth flow passage II formed by the sixth sector region, the second circumferential region, and the fifth circumferential region; and a sixth flow passage III formed by the sixth sector region, the third circumferential region, and the fourth circumferential region.

Further, in the axial direction of the valve core, the first circumferential region, the second circumferential region, the third circumferential region, the fourth circumferential region, and the fifth circumferential region have equal lengths. In the circumferential direction of the valve core, the first sector region, the second sector region, the third sector region, the fourth sector region, the fifth sector region, and the sixth sector region have equal radians.

Further, any one of the plurality of sector regions includes two sector sub-regions distributed in the circumferential direction of the valve core. The two sector sub-regions have equal radians. Any one of the two sector sub-regions and any one of the plurality of circumferential regions form a sub-cavity. All sub-cavities are divided into a first part and a second part. Sub-cavities of the first part are independently arranged. Any one of sub-cavities of the second part is in communication with another one of the sub-cavities of the second part located within a same sector region, to form one of the flow passages.

Further, operating conditions of the multi-way valve further include a seventh operating condition, in which the first sector region and the second sector region correspond to the plurality of the flow ports, the first flow port is in communication with the ninth flow port through the first sector region, the second flow port is in communication with the tenth flow port through the first sector region, the third flow port is in communication with the eighth flow port through the second sector region, and the fifth flow port is in communication with the sixth flow port through the second sector region; an eighth operating condition, in which the second sector region and the third sector region correspond to the plurality of the flow ports, the first flow port is in communication with the second flow port through the second sector region, the ninth flow port is in communication the tenth flow port through the second sector region, the fifth flow port is in communication with the third flow port through the third sector region, and the eighth flow port is in communication with the fourth flow port through the third sector region; a ninth operating condition, in which the third sector region and the fourth sector region correspond to the plurality of the flow ports, and the third flow port is in communication with the eighth flow port through the fourth sector region; a tenth operating condition, in which the fourth sector region and the fifth sector region correspond to the plurality of the flow ports, and the eighth flow port is in communication with the fourth flow port through the fifth sector region; an eleventh operating condition, in which the fifth sector region and the sixth sector region correspond to the plurality of the flow ports, the third flow port is in communication with the eighth flow port through the sixth sector region, and the fourth flow port is in communication with the fifth flow port through the sixth sector region; and a twelfth operating condition, in which the sixth sector region and the first sector region correspond to the plurality of flow ports, the fifth flow port is in communication with the third flow port through the first sector region, and the eighth flow port is in communication with the fourth flow port through the first sector region.

Further, in the first operating condition, a rotation angle of the valve core is set to be 0°, n is set to be a positive integer, and 0<n<12. When the valve core is rotated by n×30° and n is an even number, the multi-way valve is switched to any one of the second operating condition, the third operating condition, the fourth operating condition, the fifth operating condition, and the sixth operating condition. When the valve core is rotated by 360°, the valve core is rotated to return to the first operating condition. When the valve core is rotated by n×30° and n is an odd number, the multi-way valve is switched to any one of the seventh operating condition, the eighth operating condition, the ninth operating condition, the tenth operating condition, the eleventh operating condition, and the twelfth operating condition.

Further, the valve core includes a shaft sleeve, two circular end plates, a plurality of axial partition plates, and a plurality of sector partition plates. The shaft sleeve includes an outer sleeve body and an inner sleeve body arranged in the outer sleeve body. A plurality of internal flow passages penetrating the valve core in the axial direction of the valve core are arranged between the inner sleeve body and the outer sleeve body. The plurality of internal flow passages correspond to the plurality of sector regions in a one-to-one manner. The two circular end plates are arranged in parallel and fixedly connected to the outer sleeve body. The two circular end plates and the shaft sleeve are coaxially arranged. The plurality of axial partition plates and the plurality of sector partition plates are distributed in a region enclosed by the two circular end plates and the outer sleeve body, to obtain, through division, the plurality of sector regions and the plurality of circumferential regions.

Further, the main body portion includes a valve body and a sealing gasket arranged in the valve body. A region enclosed by the valve body and the sealing gasket forms the valve cavity. The plurality of the flow ports penetrate a bottom wall of the valve body and the sealing gasket to be in communication with the valve cavity. The plurality of flow ports are divided into two rows in a width direction of the valve body. One row of flow ports are sequentially the first flow port, the ninth flow port, the tenth flow port, the second flow port, and the seventh flow port in a length direction of the valve body. The other row of flow ports are sequentially the sixth flow port, the fifth flow port, the third flow port, the eighth flow port, and the fourth flow port in the length direction of the valve body. The plurality of flow ports in the two rows correspond to each other in a one-to-one manner. The first flow port and the sixth flow port are spaced apart from each other in the width direction of the valve body.

Further, the sealing gasket includes a cambered flow gasket and cambered blocking gaskets, which are connected to each other. The cambered blocking gaskets are arranged on two sides of the cambered flow gasket in the circumferential direction of the valve core. The cambered flow gasket covers at least one of the sector regions and corresponds to the two rows of flow ports. Each of the cambered blocking gaskets covers at least half of a sector region. The each of the cambered blocking gaskets is provided with a plurality of lightening holes.

Further, the valve core is demolded and has demolding locations. An outer surface of the valve core movably matches, in a sealed manner, an inner wall of the valve cavity. The outer surface of the valve core is provided with flash at the demolding locations. When the valve core is rotated, a ring formed by the outer surface of the valve core has a maximum radius of R1, a ring formed by an outer surface of the flash has a maximum radius of R2, and R2<R1.

Further, the demolding locations include a plurality of axial demolding locations. The valve core includes a plurality of axial partition plates distributed in the circumferential direction. The axial demolding locations extend in directions of the axial partition plates and are located on outer surfaces of one side of the axial partition plates away from an axis of the valve core. A flash located at each of the axial demolding locations is arranged on an outer surface of a corresponding axial partition plate in the circumferential direction of the valve core.

Further, the valve core further includes a plurality of sector partition plates. The plurality of sector partition plates are distributed between two adjacent axial partition plates. Outer surfaces of one side of the sector partition plates away from the axis of the valve core movably match, in a sealed manner, an inner wall of the valve cavity. The flash located at the each of the axial demolding locations avoids an outer surface of a corresponding sector partition plate of the sector partition plates.

Further, the demolding locations include two circumferential demolding locations. The valve core includes circular end plates located at two ends. The circumferential demolding locations extend in circumferential directions of the circular end plates and are located on outer surfaces of a side of the circular end plates away from an axis of the valve core. A flash located at each of the circumferential demolding locations is arranged on an outer surface of a corresponding circular end plate in an axis direction of the valve core.

Further, the valve core is made of plastic, and the valve core is injection-molded.

According to the technical solution of the present disclosure, a multi-way valve is provided. The multi-way valve includes a main body portion and a valve core. The main body portion is provided with a valve cavity and a plurality of flow ports. The valve core is provided with a plurality of sector regions distributed in a circumferential direction. The valve core is rotatably arranged in the valve cavity, to switch, through the different sector regions corresponding to the plurality of flow ports, the multi-way valve among a first operating condition, a second operating condition, a third operating condition, a fourth operating condition, a fifth operating condition, and a sixth operating condition. According to the solution, through rotation of the valve core, the different sector regions correspond to the plurality of flow ports, and the different operating conditions of the multi-way valve are switched. A plurality of flow paths can be controlled through one valve core. Usage is convenient, and control is simple.

### Brief Description of the Drawings

Accompanying drawings of the description serve as a constituent part of the present disclosure to provide a further understanding of the present disclosure. Illustrative embodiments of the present disclosure and their descriptions serve to explain the present disclosure, but are not to be construed as unduly limiting the present disclosure. In the accompanying drawings,
Fig. 1 shows a schematic structural diagram of a multi-way valve according to an embodiment of the present disclosure;
Fig. 2 shows a schematic assembly diagram of a valve core and a sealing gasket of the multi-way valve in Fig. 1;
Fig. 3 shows a schematic structural diagram from another angle of view of Fig. 2;
Fig. 4 shows a bottom view of the multi-way valve in Fig. 1;
Fig. 5 shows a schematic expanded view of the valve core in Fig. 2;
Fig. 6 shows a schematic diagram of a plurality of flow passages of the valve core in Fig. 2;
Fig. 7 shows a sectional view along B-B in Fig. 4;
Fig. 8 shows a sectional view along C-C in Fig. 4;
Fig. 9 shows a sectional view along D-D in Fig. 4;
Fig. 10 shows a sectional view along E-E in Fig. 4;
Fig. 11 shows a sectional view along F-F in Fig. 4;
Fig. 12 shows an enlarged view of location H in Fig. 8; and
Fig. 13 shows a schematic structural diagram of an injection molding module of the valve core in Fig. 2.

The above accompanying drawings include reference numerals as follows:
10. main body portion; 001. first flow port; 002. second flow port; 003. third flow port; 004. fourth flow port; 005. fifth flow port; 006. sixth flow port; 007. seventh flow port; 008. eighth flow port; 009. ninth flow port; 010. tenth flow port; 11. valve body; 12. sealing gasket; 121. cambered flow gasket; 122. cambered blocking gasket; 1221. lightening hole; 123. sealing rib; and 13. valve cover;
20. valve core; 201. first sector region; 202. second sector region; 203. third sector region; 204. fourth sector region; 205. fifth sector region; 206. sixth sector region; 207. first circumferential region; 208. second circumferential region; 209. third circumferential region; 210. fourth circumferential region; 211. fifth circumferential region; 212. axial demolding location; and 213. circumferential demolding location;
221. first flow passage I; 222. first flow passage II; 223. first flow passage III; 224. first flow passage IV; and 225. first flow passage V;
231. second flow passage I; 232. second flow passage II; 233. second flow passage III; and 234. second flow passage IV;
241. third flow passage I; 242. third flow passage II; and 243. third flow passage III;
251. fourth flow passage I; 252. fourth flow passage II; and 253. fourth flow passage III;
261. fifth flow passage I; 262. fifth flow passage II; 263. fifth flow passage III; and 264. fifth flow passage IV;
271. sixth flow passage I; 272. sixth flow passage II; and 273. sixth flow passage III;
28. shaft sleeve; 281. outer sleeve body; 282. inner sleeve body; 283. internal flow passage; 291. circular end plate; 292. axial partition plate; 2921. partition plate surface; and 293. sector partition plate; and
30. flash.

### Detailed Description of the Embodiments

The technical solutions in the embodiments of the present disclosure are clearly and completely described below in combination with the accompanying drawings in the embodiments of the present disclosure. Apparently, the embodiments described are merely some rather than all embodiments of the present disclosure. The following description of at least one illustrative embodiment is merely illustrative actually and in no way serves as any limitation on the present disclosure and its application or usage. All other embodiments obtained by a person of ordinary skill in the art based on the embodiments of the present disclosure without creative efforts shall fall within the scope of protection of the present disclosure.

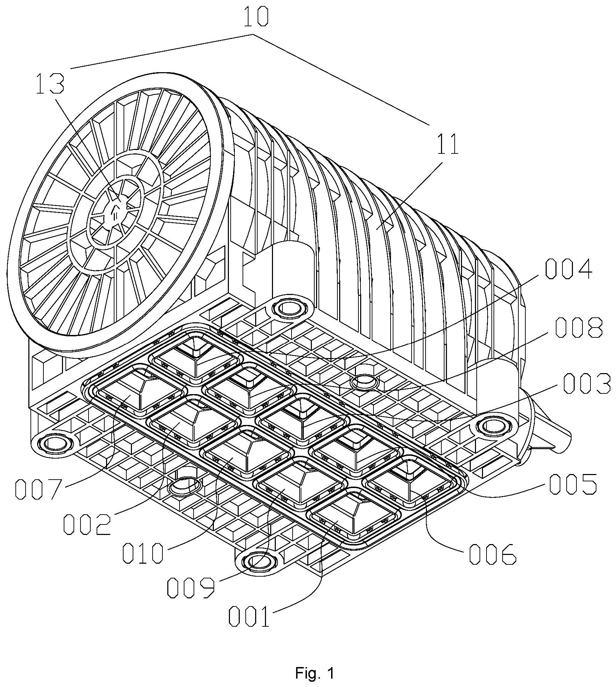

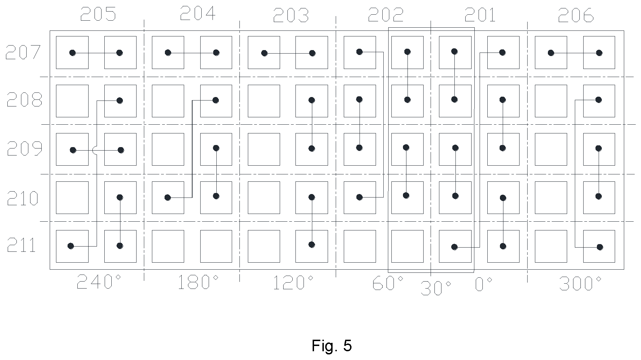

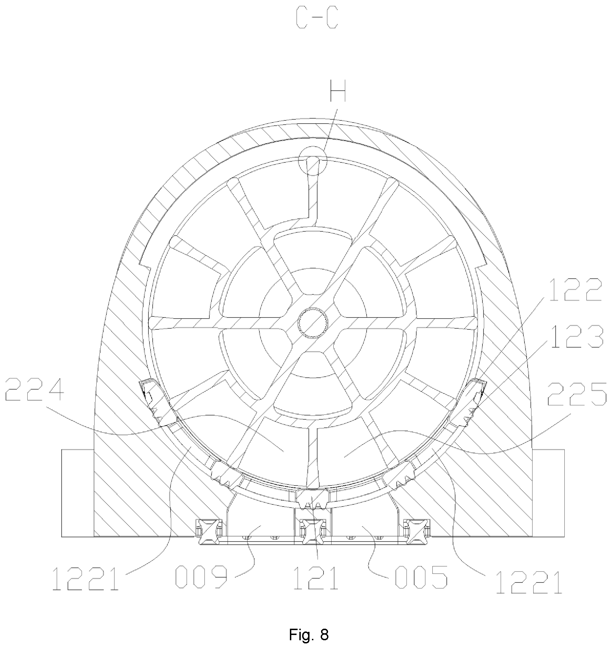

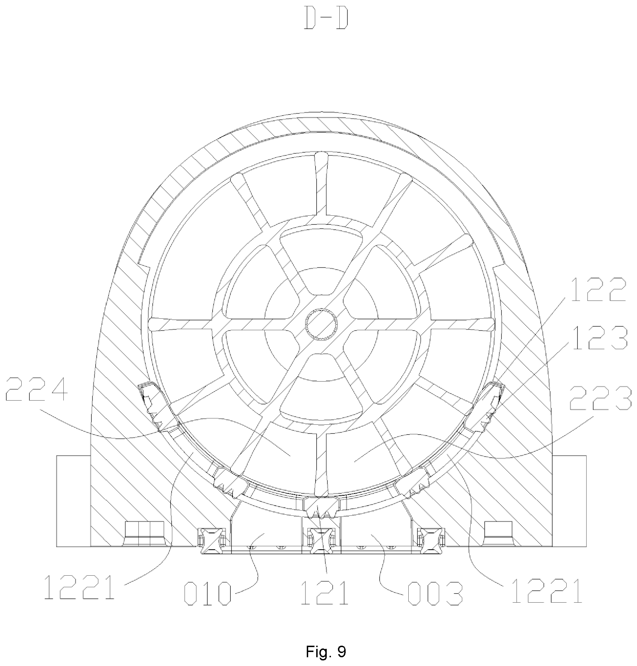

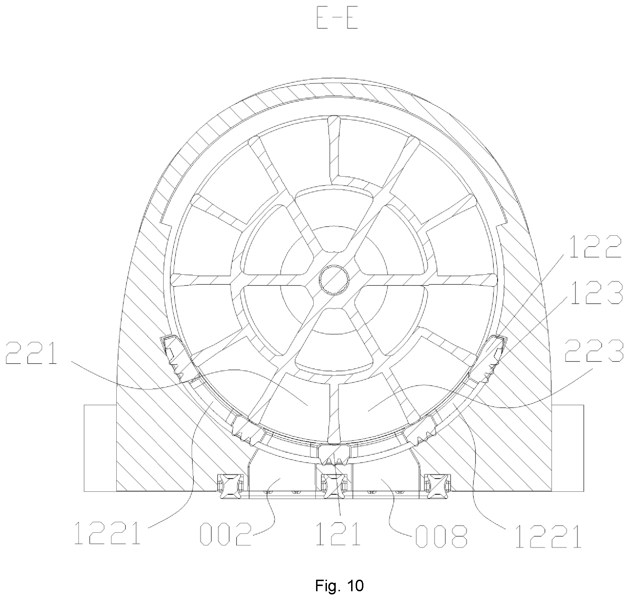

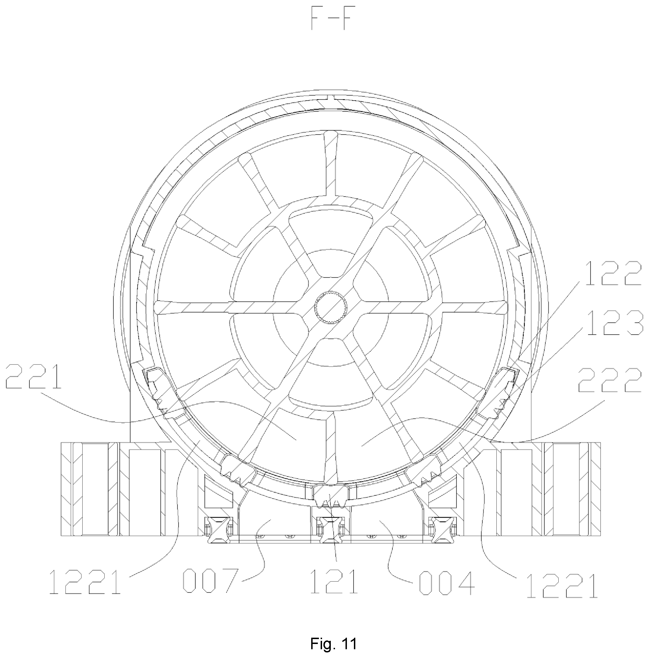

As shown in Fig. 1 to Fig. 13, the embodiments of the present disclosure provide a multi-way valve. The multi-way valve includes a main body portion 10 and a valve core 20. The main body portion 10 is provided with a valve cavity and a plurality of flow ports. The valve core 20 is provided with a plurality of sector regions distributed in a circumferential direction. The valve core 20 is rotatably arranged in the valve cavity, to switch, through the different sector regions corresponding to the plurality of flow ports, the multi-way valve among a first operating condition, a second operating condition, a third operating condition, a fourth operating condition, a fifth operating condition, and a sixth operating condition.

In the embodiment, through rotation of the valve core 20, the different sector regions correspond to the plurality of flow ports, and the different operating conditions of the multi-way valve are switched. A plurality of flow paths can be controlled through one valve core. Usage is convenient, and control is simple.

Specifically, the valve core 20 is provided with a plurality of circumferential regions sequentially distributed in an axial direction of the valve core 20, and the plurality of circumferential regions and the plurality of sector regions form a plurality of flow passages. Through such an arrangement, when the valve core aligns different sector regions with the plurality of flow ports, different operating conditions of the multi-way valve can be obtained through correspondence between the plurality of flow passages and the plurality of flow ports.

In some embodiments, in the axial direction of the valve core 20, the first circumferential region 207, the second circumferential region 208, the third circumferential region 209, the fourth circumferential region 210, and the fifth circumferential region 211 have equal lengths. In the circumferential direction of the valve core 20, the first sector region 201, the second sector region 202, the third sector region 203, the fourth sector region 204, the fifth sector region 205, and the sixth sector region 206 have equal radians. In the embodiment, by limiting lengths of the plurality of circumferential regions and radians of the plurality of sector regions, it is ensured that flow areas corresponding to the two flow ports of two ends of any one of the flow passages are equal. The situation that since flow areas corresponding to two flow ports of two ends of any one of the flow passages are different, an inlet flow rate and an outlet flow rate of this passage are unequal is prevented. Reliability and stability of fluid flowing through the flow passage of the multi-way valve are ensured. Moreover, by limiting the radians of the plurality of sector regions to be equal, it is ensured that rotation angles of the valve core 20 corresponding to all the sector regions are equal. Thus, reliability of rotation of the valve core 20 is ensured.

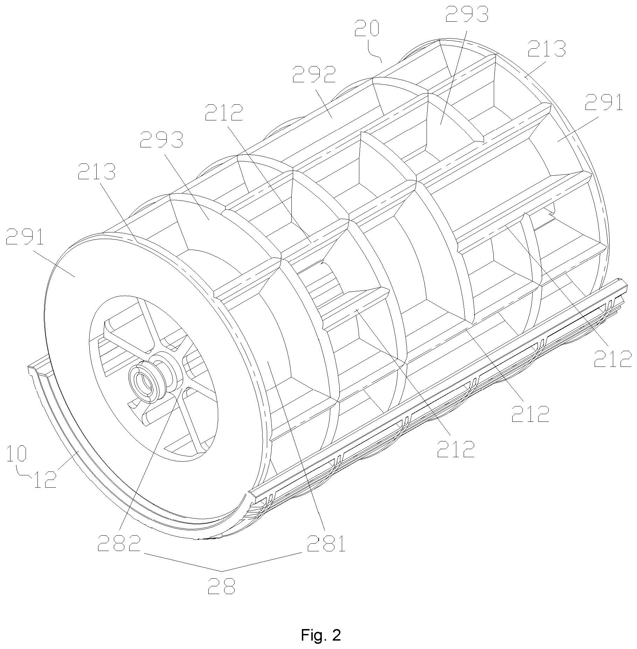

As shown in Fig. 2, Fig. 5, and Fig. 6, any one of the sector regions includes two sector sub-regions distributed in the circumferential direction of the valve core 20. The two sector sub-regions have equal radians. Any one of the sector sub-regions and any one of the circumferential regions form one sub-cavity. All the sub-cavities are divided into a first part and a second part. Sub-cavities of the first part are independently arranged. Any one of sub-cavities of the second part is in communication with another one of the sub-cavities of the second part located within a same sector region, to form one of the flow passages.

Through such an arrangement, the valve core 20 is divided into twelve sector sub-regions in the circumferential direction. In combination with the five circumferential regions obtained by dividing the valve core 20 in the axial direction, sixty sub-cavities are formed in total. Some of the sixty sub-cavities are isolated, that is, are not in communication with any one of other sub-cavities. The remaining sub-cavities are in communication with each other in pairs to form a plurality of flow passages. Thus, according to rotation of the valve core 20 in the valve cavity, different flow passage openings correspond to a plurality of flow ports, and a plurality of operating conditions of the multi-way valve can be switched. Specifically, in the embodiment, formation of the flow passages is limited. That is, any one of the flow passages is completely formed in a corresponding sector region. Thus, when the plurality of flow ports correspond to two different sector regions, only flow passages located in a same sector region and having two ends corresponding to different flow ports are in communication with each other, to limit the operating conditions.

In the embodiment, operating conditions of the multi-way valve further include a seventh operating condition, an eighth operating condition, a ninth operating condition, a tenth operating condition, an eleventh operating condition, and a twelfth operating condition. Flow states of the above operating conditions are different from the first operating condition to the sixth operating condition. Thus, applicability of the multi-way valve is further improved.

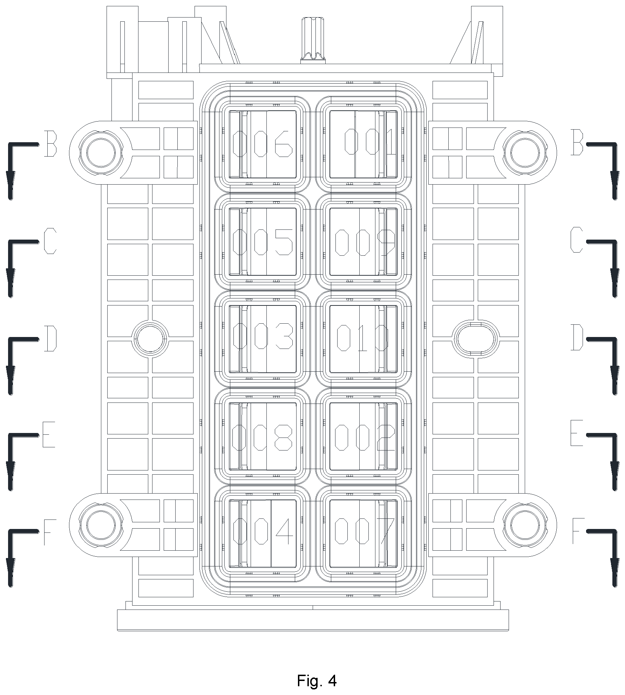

As shown in Fig. 4 to Fig. 6, in the first operating condition, a rotation angle of the valve core 20 is set to be 0°, n is set to be a positive integer, and 0<n<12. When the valve core 20 is rotated by n×30° and n is an even number, the multi-way valve is switched to any one of the second operating condition, the third operating condition, the fourth operating condition, the fifth operating condition, and the sixth operating condition. When the valve core 20 is rotated by 360°, the valve core 20 is rotated to return to the first operating condition. When the valve core 20 is rotated by n×30° and n is an odd number, the multi-way valve is switched to any one of the seventh operating condition, the eighth operating condition, the ninth operating condition, the tenth operating condition, the eleventh operating condition, and the twelfth operating condition. Through such an arrangement, a plurality of operating conditions of the multi-way valve can be accurately adjusted. The valve core 20 can be favorably processed, and reliability and stability of flow of the multi-way valve are ensured.

In the embodiment, the plurality of flow ports include a first flow port 001, a second flow port 002, a third flow port 003, a fourth flow port 004, a fifth flow port 005, a sixth flow port 006, a seventh flow port 007, an eighth flow port 008, a ninth flow port 009, and a tenth flow port 010. The plurality of flow ports are divided into two rows in a width direction of the valve body 11. One row of flow ports are sequentially the first flow port 001, the ninth flow port 009, the tenth flow port 010, the second flow port 002, and the seventh flow port 007 in a length direction of the valve body 11. The other row of flow ports are sequentially the sixth flow port 006, the fifth flow port 005, the third flow port 003, the eighth flow port 008, and the fourth flow port 004 in the length direction of the valve body 11. The plurality of flow ports in the two rows correspond to each other in a one-to-one manner. The first flow port 001 and the sixth flow port 006 are spaced apart from each other in the width direction of the valve body 11.

It can be understood that numbers and distribution manners of flow ports, sector regions, and circumferential regions can be adjusted according to actual situations, and operating conditions correspondingly change. No embodiment is given herein.

Further, in some embodiments, the plurality of flow passages include a first flow passage I 221 formed by the first sector region 201, the first circumferential region 207, and the second circumferential region 208; a first flow passage II 222 formed by the first sector region 201, the first circumferential region 207, and the fifth circumferential region 211; a first flow passage III 223 formed by the first sector region 201, the second circumferential region 208, and the third circumferential region 209; a first flow passage IV 224 formed by the first sector region 201, the third circumferential region 209, and the fourth circumferential region 210; a first flow passage V 225 formed by the first sector region 201, the fourth circumferential region 210, and the fifth circumferential region 211; a second flow passage I 231 formed by the second sector region 202, the first circumferential region 207, and the second circumferential region 208; a second flow passage II 232 formed by the second sector region 202, the second circumferential region 208, and the third circumferential region 209; a second flow passage III 233 formed by the second sector region 202, the third circumferential region 209, and the fourth circumferential region 210; a second flow passage IV 234 formed by the second sector region 202, the first circumferential region 207, and the fourth circumferential region 210; a third flow passage I 241 formed by the third sector region 203 and the first circumferential region 207; a third flow passage II 242 formed by the third sector region 203, the second circumferential region 208, and the third circumferential region 209; a third flow passage III 243 formed by the third sector region 203, the fourth circumferential region 210, and the fifth circumferential region 211; a fourth flow passage I 251 formed by the fourth sector region 204 and the first circumferential region 207; a fourth flow passage II 252 formed by the fourth sector region 204, the second circumferential region 208, and the fourth circumferential region 210; a fourth flow passage III 253 formed by the fourth sector region 204, the third circumferential region 209, and the fourth circumferential region 210; a fifth flow passage I 261 formed by the fifth sector region 205 and the first circumferential region 207; a fifth flow passage II 262 formed by the fifth sector region 205 and the third circumferential region 209; a fifth flow passage III 263 formed by the fifth sector region 205, the second circumferential region 208, and the fifth circumferential region 211; a fifth flow passage IV 264 formed by the fifth sector region 205, the fourth circumferential region 210, and the fifth circumferential region 211; a sixth flow passage I 271 formed by the sixth sector region 206 and the first circumferential region 207; a sixth flow passage II 272 formed by the sixth sector region 206, the second circumferential region 208, and the fifth circumferential region 211; and a sixth flow passage III 273 formed by the sixth sector region 206, the third circumferential region 209, and the fourth circumferential region 210.

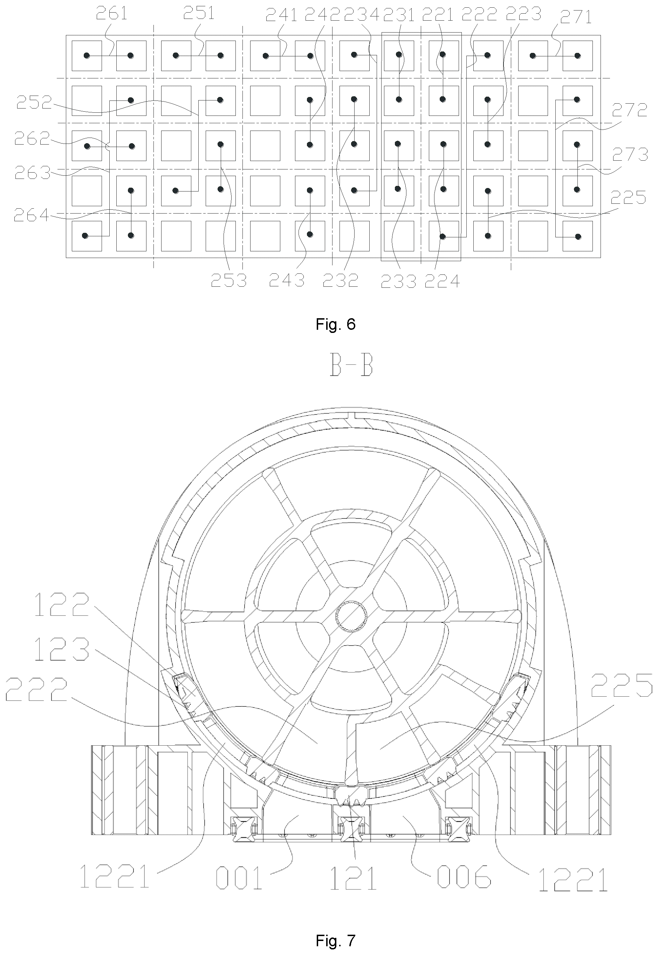

As shown in Fig. 1 to Fig. 11, sectional views of the multi-way valve in the first operating condition are shown in Fig. 7 to Fig. 11. The rotation angle of the valve core 20 in this case is set to be an initial angle of 0°. When the multi-way valve is in the first operating condition, the first sector region 201 directly faces a plurality of flow ports. Ten flow ports form five groups of flow passages in communication with each other in pairs. The first flow port 001 is in communication with the fourth flow port 004 through the first flow passage II 222. The second flow port 002 is in communication with the seventh flow port 007 through the first flow passage V 225. The third flow port 003 is in communication with the eighth flow port 008 through the first flow passage IV 224. The fifth flow port 005 is in communication with the sixth flow port 006 through the first flow passage I 221. The ninth flow port 009 is in communication with the tenth flow port 010 through the first flow passage III 223.

As shown in Fig. 4 to Fig. 6, a direction from right to left in Fig. 4 is a clockwise rotation direction of the valve core 20. When n=1, that is, after the valve core 20 is rotated clockwise by 30°, the multi-way valve is switched to the seventh operating condition. When the multi-way valve is in the seventh operating condition, each of the first sector region 201 and the second sector region 202 has a sector sub-region corresponding to the plurality of flow ports. The sector sub-region of the first sector region 201 corresponds to a row of flow ports where the seventh flow port 007 is located. The sector sub-region of the second sector region 202 corresponds to a row of flow ports where the fourth flow port 004 is located. In combination with the above limitation (that is, any one of the flow passages is completely formed in a corresponding sector region, such that when a plurality of flow ports correspond to two different sector regions at the same time, only flow passages located in a same sector region and having two ends corresponding to different flow passages are in communication with each other) on the formation of the flow passages, the first flow port 001 is in communication with the ninth flow port 009 through the first flow passage I 221 located in the first sector region 201. The second flow port 002 is in communication with the tenth flow port 010 through the first flow passage IV 224 located in the first sector region 201. The third flow port 003 is in communication with the eighth flow port 008 through the second flow passage IV 234 located in the second sector region 202. The fifth flow port 005 is in communication with the sixth flow port 006 through the second flow passage I 231 located in the second sector region 202. A sub-cavity corresponding to the fourth flow port 004 is an independent cavity, and the flow port is not in communication with other flow ports. The seventh flow port 007 corresponds to one end of the first flow passage II 222, but the other end of the first flow passage II 222 does not correspond to other flow ports. Thus, the seventh flow port 007 is also equivalent to an independent cavity.

As shown in Fig. 4 to Fig. 6, when n=2, that is, after the valve core 20 is rotated clockwise by 60°, the multi-way valve is switched to the second operating condition. When the multi-way valve is in the second operating condition, the second sector region 202 directly faces a plurality of flow ports. The first flow port 001 is in communication with the ninth flow port 009 through the second flow passage I 231. The second flow port 002 is in communication with the tenth flow port 010 through the second flow passage III 233. The third flow port 003 is in communication with the fifth flow port 005 through the second flow passage II 232. The sixth flow port 006 is in communication with the eighth flow port 008 through the second flow passage IV 234. A sub-cavity corresponding to the fourth flow port 004 and a sub-cavity corresponding to the seventh flow port 007 are independent cavities, and these flow ports are not in communication with other flow ports.

As shown in Fig. 4 to Fig. 6, when n=3, that is, after the valve core 20 is rotated clockwise by 90°, the multi-way valve is switched to the eighth operating condition. When the multi-way valve is in the eighth operating condition, each of the second sector region 202 and the third sector region 203 has a sector sub-region corresponding to a plurality of flow ports. The sector sub-region of the second sector region 202 corresponds to a row of flow ports where the seventh flow port 007 is located. The sector sub-region of the third sector region 203 corresponds to a row of flow ports where the fourth flow port 004 is located. In combination with the above limitation on the formation of the flow passages, the first flow port 001 is in communication with the second flow port 002 through the second flow passage IV 234 located in the second sector region 202. The ninth flow port 009 is in communication with the tenth flow port 010 through the second flow passage II 232 located in the second sector region 202. The fifth flow port 005 is in communication with the third flow port 003 through the third flow passage II 242 located in the third sector region 203. The eighth flow port 008 is in communication with the fourth flow port 004 through the third flow passage III 243 located in the third sector region 203. A sub-cavity corresponding to the seventh flow port 007 is an independent cavity, and the flow port is not in communication with other flow ports. The sixth flow port 006 corresponds to one end of the third flow passage I 241, but the other end of the third flow passage I 241 does not correspond to other flow ports. Thus, the sixth flow port 006 is also equivalent to an independent cavity.

As shown in Fig. 4 to Fig. 6, when n=4, that is, after the valve core 20 is rotated clockwise by 120°, the multi-way valve is switched to the third operating condition. When the multi-way valve is in the third operating condition, the third sector region 203 directly faces the plurality of flow ports. The first flow port 001 is in communication with the sixth flow port 006 through the third flow passage I 241. The second flow port 002 is in communication with the seventh flow port 007 through the third flow passage III 243. The ninth flow port 009 is in communication with the tenth flow port 010 through the third flow passage II 242. A sub-cavity corresponding to the third flow port 003, a sub-cavity corresponding to the fourth flow port 004, a sub-cavity corresponding to the fifth flow port 005, and a sub-cavity corresponding to the eighth flow port 008 are independent cavities, and these flow ports are not in communication with other flow ports.

As shown in Fig. 4 to Fig. 6, when n=5, that is, after the valve core 20 is rotated clockwise by 150°, the multi-way valve is switched to the ninth operating condition. When the multi-way valve is in the ninth operating condition, each of the third sector region 203 and the fourth sector region 204 has a sector sub-region corresponding to a plurality of flow ports. The sector sub-region of the third sector region 203 corresponds to a row of flow ports where the seventh flow port 007 is located. The sector sub-region of the fourth sector region 204 corresponds to a row of flow ports where the fourth flow port 004 is located. In combination with the above limitation on the formation of the flow passages, the third flow port 003 is in communication with the eighth flow port 008 through the fourth flow passage III 253 located in the fourth sector region 204. A sub-cavity corresponding to the second flow port 002, a sub-cavity corresponding to the fourth flow port 004, a sub-cavity corresponding to the seventh flow port 007, a sub-cavity corresponding to the ninth flow port 009, and a sub-cavity corresponding to the tenth flow port 010 are independent cavities, and these flow ports are not in communication with other flow ports. The first flow port 001 corresponds to one end of the third flow passage I 241, but the other end of the third flow passage I 241 does not correspond to other flow ports. Thus, the first flow port 001 is also equivalent to an independent cavity. The fifth flow port 005 corresponds to one end of the fourth flow passage II 252, but the other end of the fourth flow passage II 252 does not correspond to other flow ports. Thus, the fifth flow port 005 is also equivalent to an independent cavity. The sixth flow port 006 corresponds to one end of the fourth flow passage I 251, but the other end of the fourth flow passage I 251 does not correspond to other flow ports. Thus, the sixth flow port 006 is also equivalent to an independent cavity.

As shown in Fig. 4 to Fig. 6, when n=6, that is, after the valve core 20 is rotated clockwise by 180°, the multi-way valve is switched to the fourth operating condition. When the multi-way valve is in the fourth operating condition, the fourth sector region 204 directly faces a plurality of flow ports. The first flow port 001 is in communication with the sixth flow port 006 through a fourth flow passage I 251. The second flow port 002 is in communication with the tenth flow port 010 through a fourth flow passage III 253. The eighth flow port 008 is in communication with the ninth flow port 009 through the fourth flow passage II 252. A sub-cavity corresponding to the third flow port 003, a sub-cavity corresponding to the fourth flow port 004, a sub-cavity corresponding to the fifth flow port 005, and a sub-cavity corresponding to the seventh flow port 007 are independent cavities, and these flow ports are not in communication with other flow ports.

As shown in Fig. 4 to Fig. 6, when n=7, that is, after the valve core 20 is rotated clockwise by 210°, the multi-way valve is switched to the tenth operating condition. When the multi-way valve is in the tenth operating condition, each of the fourth sector region 204 and the fifth sector region 205 has a sector sub-region corresponding to a plurality of flow ports. The sector sub-region of the fourth sector region 204 corresponds to a row of flow ports where the seventh flow port 007 is located. The sector sub-region of the fifth sector region 205 corresponds to a row of flow ports where the fourth flow port 004 is located. In combination with the above limitation on the formation of the flow passages, the eighth flow port 008 is in communication with the fourth flow port 004 through the fifth flow passage IV 264 located in the fifth sector region 205. A sub-cavity corresponding to the seventh flow port 007, a sub-cavity corresponding to the ninth flow port 009, and a sub-cavity corresponding to the tenth flow port 010 are independent cavities, and these flow ports are not in communication with other flow ports. The first flow port 001 corresponds to one end of the fourth flow passage I 251, but the other end of the fourth flow passage I 251 does not correspond to other flow ports. Thus, the first flow port 001 is also equivalent to an independent cavity. The second flow port 002 corresponds to one end of the fourth flow passage II 252, but the other end of the fourth flow passage II 252 does not correspond to other flow ports. Thus, the second flow port 002 is also equivalent to an independent cavity. The third flow port 003 corresponds to one end of the fifth flow passage II 262, but the other end of the fifth flow passage II 262 does not correspond to other flow ports. Thus, the third flow port 003 is also equivalent to an independent cavity. The fifth flow port 005 corresponds to one end of the fifth flow passage III 263, but the other end of the fifth flow passage III 263 does not correspond to other flow ports. Thus, the fifth flow port 005 is also equivalent to an independent cavity. The sixth flow port 006 corresponds to one end of the fifth flow passage I 261, but the other end of the fifth flow passage I 261 does not correspond to other flow ports. Thus, the sixth flow port 006 is also equivalent to an independent cavity.

As shown in Fig. 4 to Fig. 6, when n=8, that is, after the valve core 20 is rotated clockwise by 240°, the multi-way valve is switched to the fifth operating condition. When the multi-way valve is in the fifth operating condition, the fifth sector region 205 directly faces a plurality of flow ports. The first flow port 001 is in communication with the sixth flow port 006 through the fifth flow passage I 261. The second flow port 002 is in communication with the seventh flow port 007 through the fifth flow passage IV 264. The third flow port 003 is in communication with the tenth flow port 010 through the fifth flow passage II 262. The fourth flow port 004 is in communication with the ninth flow port 009 through the fifth flow passage III 263. A sub-cavity corresponding to the fifth flow port 005 and a sub-cavity corresponding to the eighth flow port 008 are independent cavities, and these flow ports are not in communication with other flow ports.

As shown in Fig. 4 to Fig. 6, when n=9, that is, after the valve core 20 is rotated clockwise by 270°, the multi-way valve is switched to the eleventh operating condition. When the multi-way valve is in the eleventh operating condition, each of the fifth sector region 205 and the sixth sector region 206 has a sector sub-region corresponding to a plurality of flow ports. A sector sub-region of the fifth sector region 205 corresponds to a row of flow ports where the seventh flow port 007 is located. A sector sub-region of the sixth sector region 206 corresponds to a row of flow ports where the fourth flow port 004 is located. In combination with the above limitation on the formation of the flow passages, the third flow port 003 is in communication with the eighth flow port 008 through the sixth flow passage III 273 located in the sixth sector region 206. The fourth flow port 004 is in communication with the fifth flow port 005 through the sixth flow passage II 272 located in the sixth sector region 206. A sub-cavity corresponding to the second flow port 002 and a sub-cavity corresponding to the ninth flow port 009 are independent cavities, and these flow ports are not in communication with other flow ports. The first flow port 001 corresponds to one end of the fifth flow passage I 261, but the other end of the fifth flow passage I 261 does not correspond to other flow ports. Thus, the first flow port 001 is also equivalent to an independent cavity. The sixth flow port 006 corresponds to one end of the sixth flow passage I 271, but the other end of the sixth flow passage I 271 does not correspond to other flow ports. Thus, the sixth flow port 006 is also equivalent to an independent cavity. The seventh flow port 007 corresponds to one end of the fifth flow passage III 263, but the other end of the fifth flow passage III 263 does not correspond to other flow ports. Thus, the seventh flow port 007 is also equivalent to an independent cavity. The tenth flow port 010 corresponds to one end of the fifth flow passage II 262, but the other end of the fifth flow passage II 262 does not correspond to other flow ports. Thus, the tenth flow port 010 is also equivalent to an independent cavity.

As shown in Fig. 4 to Fig. 6, when n=10, that is, after the valve core 20 is rotated clockwise by 300°, the multi-way valve is switched to the sixth operating condition. When the multi-way valve is in the sixth operating condition, the sixth sector region 206 directly faces a plurality of flow ports. The first flow port 001 is in communication with the sixth flow port 006 through the sixth flow passage I 271. The second flow port 002 is in communication with the tenth flow port 010 through the sixth flow passage III 273. The seventh flow port 007 is in communication with the ninth flow port 009 through the sixth flow passage II 272. A sub-cavity corresponding to the third flow port 003, a sub-cavity corresponding to the fourth flow port 004, a sub-cavity corresponding to the fifth flow port 005, and a sub-cavity corresponding to the eighth flow port 008 are independent cavities, and these flow ports are not in communication with other flow ports.

As shown in Fig. 4 to Fig. 6, when n=11, that is, after the valve core 20 is rotated clockwise by 330°, the multi-way valve is switched to the twelfth operating condition. When the multi-way valve is in the twelfth operating condition, each of the sixth sector region 206 and the first sector region 201 has a sector sub-region corresponding to a plurality of flow ports. The sector sub-region of the sixth sector region 206 corresponds to a row of flow ports where the seventh flow port 007 is located. The sector sub-region of the first sector region 201 corresponds to a row of flow ports where the fourth flow port 004 is located. In combination with the above limitation on the formation of the flow passages, the fifth flow port 005 is in communication with the third flow port 003 through the first flow passage III 223 located in the first sector region 201. The eighth flow port 008 is in communication with the fourth flow port 004 through the first flow passage V 225 located in the first sector region 201. A sub-cavity corresponding to the second flow port 002, a sub-cavity corresponding to the seventh flow port 007, a sub-cavity corresponding to the ninth flow port 009, and a sub-cavity corresponding to the tenth flow port 010 are independent cavities, and these flow port are not in communication with other flow ports. The first flow port 001 corresponds to one end of the sixth flow passage I 271, but the other end of the sixth flow passage I 271 does not correspond to other flow ports. Thus, the first flow port 001 is also equivalent to an independent cavity. The sixth flow port 006 corresponds to one end of the first flow passage II 222, but the other end of the first flow passage II 222 does not correspond to other flow ports. Thus, the tenth flow port 010 is also equivalent to an independent cavity.

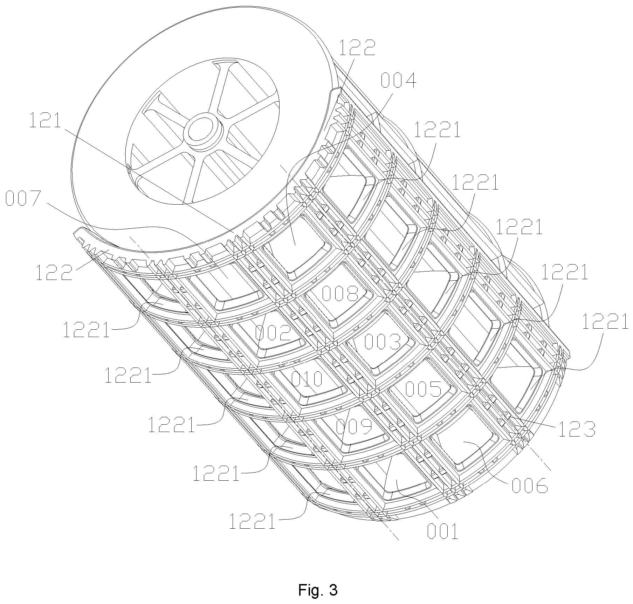

As shown in Fig. 2 and Fig. 3, the valve core 20 includes a shaft sleeve 28, two circular end plates 291, a plurality of axial partition plates 292, and a plurality of sector partition plates 293. The shaft sleeve 28 includes an outer sleeve body 281 and an inner sleeve body 282 arranged in the outer sleeve body 281. A plurality of internal flow passages 283 penetrating the valve core 20 in the axial direction of the valve core 20 are arranged between the inner sleeve body 282 and the outer sleeve body 281. The plurality of internal flow passages 283 correspond to the plurality of sector regions in a one-to-one manner. The two circular end plates 291 are arranged in parallel and fixedly connected to the outer sleeve body 281. The two circular end plates 291 and the shaft sleeve 28 are coaxially arranged. The plurality of axial partition plates 292 and the plurality of sector partition plates 293 are distributed in a region enclosed by the two circular end plates 291 and the outer sleeve body 281, to obtain, through division, the plurality of sector regions and the plurality of circumferential regions.

In the embodiment, a main body of the valve core 20 is formed by the shaft sleeve 28 and the circular end plates 291 at two ends. A region of an outer periphery of the outer sleeve body 281 of the valve core 20 is divided by a plurality of axial partition plates 292 to obtain a plurality of sector regions. A region of an outer periphery of the outer sleeve body 281 of the valve core 20 is divided by a plurality of sector partition plates 293 to obtain a plurality of circumferential regions. Through such an arrangement, the sixty sub-cavities in the embodiment can be favorably rapidly obtained through division and arranged. Moreover, a communication situation between any two adjacent sub-cavities can be adjusted according to arrangements of the axial partition plates 292 and the sector partition plates 293. Thus, the flow passages can be favorably arranged and formed. Further, the inner sleeve body 282 is provided with a plurality of inner cavities. The plurality of inner cavities correspond to the plurality of sector regions in a one-to-one manner. Any one of the inner cavities has two openings. Two openings in a same inner cavity are configured to be in communication with any two non-adjacent sub-cavities located in a same sector region. Thus, the flow passages across the circumferential regions can be favorably arranged and formed.

As shown in Fig. 7 to Fig. 11, the main body portion 10 includes a valve body 11 and a sealing gasket 12 arranged in the valve body 11. A region enclosed by the valve body 11 and the sealing gasket 12 forms the valve cavity. The plurality of the flow ports penetrate a bottom wall of the valve body 11 and the sealing gasket 12 to be in communication with the valve cavity. In the embodiment, the valve cavity is provided with an accommodation groove. The sealing gasket 12 is arranged in the accommodation groove and is provided with a plurality of through openings corresponding to the plurality of flow ports. The valve body 11 is provided with a plurality of through holes. The plurality of through holes are in communication with the plurality of through openings in a one-to-one correspondence manner to form the plurality of flow ports. A side of the sealing gasket 12 facing an axis of the valve cavity is flush with an inner wall of the valve cavity. The valve core 20 is rotatably arranged in the valve cavity and forms a sealing fit with the sealing gasket 12. The flow passages are sealed through the sealing gasket 12, such that failure of the multi-way valve caused by internal leakage of flow passages in an operating condition is prevented.

As shown in Fig. 3 and Fig. 7 to Fig. 11, the sealing gasket 12 includes a cambered flow gasket 121 and cambered blocking gaskets 122, which are connected to each other. The cambered blocking gaskets 122 are arranged on two sides of the cambered flow gasket 121 in the circumferential direction of the valve core 20. The cambered flow gasket 121 covers at least one of the sector regions and correspond to the two rows of flow ports. Each of the cambered blocking gaskets 122 covers at least half of the sector region.

In the embodiment, the plurality of flow ports are divided into two rows. The plurality of flow ports in the two rows penetrate the cambered flow gasket 121. The radian of the cambered flow gasket 121 correspondingly cover two adjacent sector sub-regions. By arranging the cambered blocking gaskets 122, a sealing effect of the sealing gasket 12 on the valve core 20 is improved. The following situation is prevented: when only the cambered flow gasket 121 is arranged, one sub-cavity in half of one sector region corresponds to and is in communication with one of the flow ports, but another sub-cavity in communication with the sub-cavity in the sector region is located in the other half of the sector region and is not provided with the sealing gasket 12, such that fluid leaks into the valve cavity after entering the sector region through the flow ports.

In some embodiments, each of the cambered blocking gaskets 122 is provided with a plurality of lightening holes 1221. Through such an arrangement, a weight of the sealing gasket 12 can be reduced. Moreover, the sealing gasket 12 can be miniaturized based on ensuring the sealing effect of the cambered blocking gasket 122.

In some embodiments, the sealing gasket 12 further includes a plurality of sealing ribs 123. The plurality of sealing ribs 123 are distributed on a surface of the sealing gasket 12 avoiding the flow ports and the lightening holes 1221. Through such an arrangement, a sealing effect of the sealing gasket 12 between the valve core 20 and the plurality of flow ports can be improved. Optionally, the sealing ribs 123 are elastic ribs such that applicability of the sealing gasket 12 can be improved.

It can be understood that in the embodiment, the main body portion 10 further includes a valve cover 13 and a sealing ring. The valve cover 13 is connected, in a sealed manner, to the valve body 11 through the sealing ring, to block an opening of the valve cavity in an axial direction. Through such an arrangement, sealing between the valve body 11 and the valve cover 13 is achieved through the sealing ring, such that fluid in the valve body 11 is prevented from flowing out of the valve cover 13, and sealing performance of the multi-way valve is improved.

As shown in Fig. 2, Fig. 8, Fig. 12, and Fig. 13, the valve core 20 is demolded and has demolding locations. An outer surface of the valve core 20 movably matches, in a sealed manner, an inner wall of the valve cavity. The outer surface of the valve core 20 is provided with flash 30 at each of the demolding locations. When the valve core 20 is rotated, a ring formed by the outer surface of the valve core 20 has a maximum radius of R1, a ring formed by an outer surface of the flash 30 has a maximum radius of R2, and R2<R1.

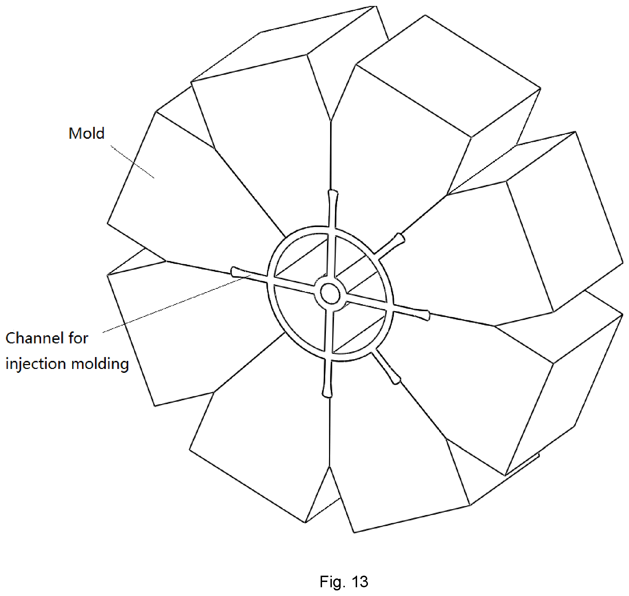

In the embodiment, by adjusting the demolding locations, the situation that when the valve core 20 is rotated, a maximum radius of a ring formed by the flash 30 is greater than a maximum radius of a ring formed by an outer surface of the valve core 20 is prevented. Thus, the inner wall of the valve cavity is prevented from being worn by the flash 30, and reliability of the valve core component is ensured. Specifically, the valve core 20 in the embodiment is injection-molded through an injection molding module shown in Fig. 13. Channels for injection molding can be formed between different molds.

Specifically, the demolding locations include a plurality of axial demolding locations 212. The axial demolding locations 212 extend in directions of the axial partition plates 292 and are located on outer surfaces of one side of the axial partition plates 292 away from an axis of the valve core 20. A flash 30 located at each of the axial demolding locations 212 is arranged on an outer surface of a corresponding axial partition plate 292 in the circumferential direction of the valve core 20.

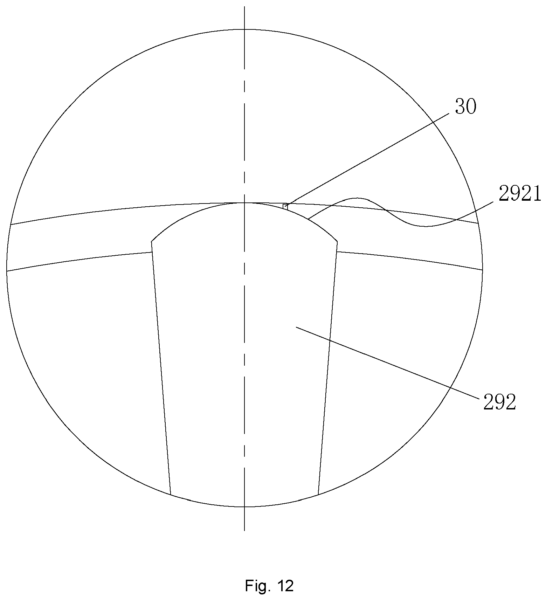

As shown in Fig. 12, the outer surface of the each of the axial partition plates 292 is a partition plate surface 2921. The flash 30 located at the each of the axial demolding locations 212 is arranged, in one direction, on the outer surface (the partition plate surface 2921) of the corresponding axial partition plate 292 in the axial direction of the valve core 20, and in the other direction, on the outer surface (the partition plate surface 2921) of the axial partition plate 292 in the circumferential direction of the valve core 20. Through such an arrangement, based on ensuring that the flash 30 formed at the axial demolding location 212 cannot be rotated, and the inner wall of the valve cavity cannot be worn, demolding effects of the axial demolding locations 212 are ensured, and the valve core 20 can be favorably demolded.

As shown in Fig. 12, in sectional shape of the each of the axial partition plates 292, the outer surface (the partition plate surface 2921) is a bilaterally-symmetrical circular arc. A center of the circular arc is located on a symmetrical line passing through the axis of the valve core 20. The flash 30 is distributed in the circumferential direction of the valve core 20 and located on a side of the symmetrical line. In the embodiment, the axial demolding locations 212 on the plurality of axial partition plates 292 are all limited, such that the flash 30 cannot be formed in middles of the partition plate surfaces 2921. It is further ensured that the strip-shaped flashes 30 formed through demolding at the plurality of axial demolding locations 212 cannot affect the rotation of the valve core 20 in the valve cavity.

Outer surfaces of one side of the sector partition plates 293 away from the axis of the valve core 20 movably match, in a sealed manner, an inner wall of the valve cavity. The flashes 30 located at the axial demolding locations 212 avoid outer surfaces of the sector partition plates 293. Through such an arrangement, the situation that the flashes 30 formed through demolding at the axial demolding locations 212 on the sector partition plate 293 still protrudes out of the outer surface of the valve core 20 is prevented, and reliability of the valve core component is ensured.

In some embodiments, the demolding locations include two circumferential demolding locations 213. The valve core 20 includes circular end plates 291 located at two ends. Each of the circumferential demolding locations 213 extends in a circumferential direction of a corresponding circular end plate 291 and is located on an outer surface of a side of the circular end plate 291 away from an axis of the valve core 20. Flashes 30 located at the circumferential demolding locations 213 are arranged on outer surfaces of the circular end plates 291 in an axis direction of the valve core 20.

In the embodiment, the outer surface of the circular end plate 291 is an end plate surface. The flash 30 located at the circumferential demolding location 213 is arranged, in one direction, on the outer surface (the end plate surfaces) of the corresponding circular end plate 291 in the circumferential direction of the circular end plate 291, and in the other direction, on the outer surface (the end plate surface) of the circular end plate 291 in the axis direction of the valve core 20. Through such an arrangement, based on ensuring that the flash 30 formed at the each of the circumferential demolding locations 213 cannot be rotated, and the inner wall of the valve cavity cannot be worn, demolding effects of the circumferential demolding locations 213 are ensured, and the valve core 20 can be favorably demolded.

In some embodiments, in a sectional shape of the each of the circular end plates 291, the outer surface (the end plate surface, which can alternatively be understood as a peripheral surface of the circular end plate 291) is a bilaterally-symmetrical circular arc. A center of the circular arc is located on a symmetrical line passing through the axis of the valve core 20. The flash 30 is arranged in the axis direction of the valve core 20 and located on one side of the symmetrical line. In the embodiment, the circumferential demolding locations 213 on the two circular end plates 291 are limited, such that the flashes 30 cannot be formed in middles of the end plate surfaces. It is further ensured that the annular flashes 30 formed through demolding at the plurality of circumferential demolding locations 213 cannot affect the rotation of the valve core 20 in the valve cavity. It can be understood that the sectional shapes of the outer surfaces (the end plate surfaces) of the circular end plates 291 and the sectional shapes of the outer surfaces (the partition plate surfaces 2921) of the axial partition plates 292 are circular arcs. The plurality of partition plate surfaces 2921 and the plurality of end plate surfaces are configured to form the outer surface of the valve core 20 which movably matches, in a sealed manner, the inner wall of the valve cavity.

In some embodiments, the valve core 20 is made of plastic, and the valve core 20 is injection-molded. Through such an arrangement, the valve core 20 can be favorably processed and molded.

Specifically, the multi-way valve further includes an actuator. The actuator is arranged at the main body portion 10 and is in driving connection to the valve core 20. Through such an arrangement, the valve core 20 can be favorably rotatably controlled. It can be understood that the actuator is a single-motor actuator. Optionally, the multi-way valve further includes a rotary shaft. One end of the rotary shaft fixedly penetrates the valve core 20, and the other end of the rotary shaft protrudes out of the valve core 20 and the valve cover 13. The actuator is in driving connection to the end of the rotary shaft protruding out of the valve core 20.

It should be noted that terms used herein are merely for describing particular embodiments and are not intended to limit illustrative embodiments of the present disclosure. As used herein, singular is also intended to include plural unless the context clearly points out singular or plural. In addition, it should be understood that terms "comprise" and/or "include" used in the description indicate the presence of features, steps, operations, devices, assemblies and/or their combinations.

Unless specifically stated otherwise, relative arrangements, numerical expressions, and values of components and steps stated in these embodiments do not limit the scope of the present disclosure. Moreover, it should be understood that sizes of various parts shown in figures are not drawn according to an actual scale for ease of description. Techniques, methods and devices known to those of ordinary skill in the related art may not be discussed in detail, but should be considered as part of the authorized description where appropriate. In all instances shown and discussed herein, any specific value should be interpreted as merely illustrative rather than limitative. Thus, other instances of the illustrative embodiments can have different values. It should be noted that similar numerals and letters denote similar items in the following accompanying drawings. Thus, once an item is defined in one figure, it is not required to be further discussed in the subsequent figures.

In the description of the present disclosure, it should be understood that orientational or positional relationships indicated by orientation words such as "front, back, up, down, left, and right", "transverse, vertical, perpendicular, and horizontal", and "top and bottom" are generally based on orientational or positional relationships shown in the accompanying drawings, and are for the convenience of describing the present disclosure and simplifying the description only. Unless otherwise stated, these orientation words do not indicate or imply that devices or elements indicated thereby must have particular orientations or must be constructed and operated in particular orientations and thus cannot be construed as limiting the scope of protection of the present disclosure. Orientation words "inner and outer" refer to an interior and an exterior relative to an outline of each component.

For ease of description, spatial relative terms such as "over", "above", "on an upper surface", and "on" may be used herein to describe spatial positional relationships of one device or feature with other devices or features shown in the figures. It should be understood that the spatial relative terms are intended to include different orientations in use or operation in addition to the orientations of the devices described in the figures. For instance, if the device in a figure is inverted, the device described as being located "above" or "over" another device or structure would then be positioned "below" or "under" another device or structure. Thus, the illustrative term "above" can include two orientations of "above" and "below." The device can also be positioned in other different ways (being rotated by 90 degrees or being positioned at other orientations), and the spatial relative description used herein is interpreted accordingly.

In addition, it should be noted that use of words such as "first" and "second" to define parts is only for the purpose of conveniently distinguishing corresponding parts. Unless otherwise stated, the above words do not have special meanings, and thus cannot be understood as limiting the scope of protection of the present disclosure.

The above embodiments are merely preferred embodiments of the present disclosure, and are not used for limiting the present disclosure. A person skilled in the art can make various modifications and changes on the present disclosure. Any modifications, equivalent substitutions, improvements, etc. within the spirit and principles of the present disclosure should fall within the scope of protection of the present disclosure.

## Claims

1. A multi-way valve, comprising:
a main body portion (10), wherein the main body portion (10) is provided with a valve cavity and a plurality of flow ports, and the plurality of flow ports comprise a first flow port (001), a second flow port (002), a third flow port (003), a fourth flow port (004), a fifth flow port (005), a sixth flow port (006), a seventh flow port (007), an eighth flow port (008), a ninth flow port (009), and a tenth flow port (010); and
a valve core (20), wherein the valve core (20) is provided with a plurality of sector regions, the plurality of sector regions comprise a first sector region (201), a second sector region (202), a third sector region (203), a fourth sector region (204), a fifth sector region (205), and a sixth sector region (206) which are sequentially distributed in a circumferential direction of the valve core (20), and the valve core (20) is rotatably arranged in the valve cavity, to switch, through the plurality of sector regions, the multi-way valve to any one of operating conditions as follows:
a first operating condition, in which the first sector region (201) directly faces the plurality of flow ports, the first flow port (001) is in communication with the fourth flow port (004), the second flow port (002) is in communication with the seventh flow port (007), the third flow port (003) is in communication with the eighth flow port (008), the fifth flow port (005) is in communication with the sixth flow port (006), and the ninth flow port (009) is in communication with the tenth flow port (010);
a second operating condition, in which the second sector region (202) directly faces the plurality of flow ports, the first flow port (001) is in communication with the ninth flow port (009), the second flow port (002) is in communication with the tenth flow port (010), the third flow port (003) is in communication with the fifth flow port (005), and the sixth flow port (006) is in communication with the eighth flow port (008);
a third operating condition, in which the third sector region (203) directly faces the plurality of flow ports, the first flow port (001) is in communication with the sixth flow port (006), the second flow port (002) is in communication with the seventh flow port (007), and the ninth flow port (009) is in communication with the tenth flow port (010);
a fourth operating condition, in which the fourth sector region (204) directly faces the plurality of flow ports, the first flow port (001) is in communication with the sixth flow port (006), the second flow port (002) is in communication with the tenth flow port (010), and the eighth flow port (008) is in communication with the ninth flow port (009);
a fifth operating condition, in which the fifth sector region (205) directly faces the plurality of flow ports, the first flow port (001) is in communication with the sixth flow port (006), the second flow port (002) is in communication with the seventh flow port (007), the third flow port (003) is in communication with the tenth flow port (010), and the fourth flow port (004) is in communication with the ninth flow port (009); and
a sixth operating condition, in which the sixth sector region (206) directly faces the plurality of flow ports, the first flow port (001) is in communication with the sixth flow port (006), the second flow port (002) is in communication with the tenth flow port (010), and the seventh flow port (007) is in communication with the ninth flow port (009).

2. The multi-way valve according to claim 1, wherein the valve core (20) is provided with a plurality of circumferential regions, the plurality of circumferential regions comprise a first circumferential region (207), a second circumferential region (208), a third circumferential region (209), a fourth circumferential region (210), and a fifth circumferential region (211) which are sequentially arranged in an axial direction of the valve core (20), the plurality of circumferential regions and the plurality of sector regions form a plurality of flow passages, and the plurality of flow passages comprise:
a first flow passage I (221) formed by the first sector region (201), the first circumferential region (207), and the second circumferential region (208);
a first flow passage II (222) formed by the first sector region (201), the first circumferential region (207), and the fifth circumferential region (211);
a first flow passage III (223) formed by the first sector region (201), the second circumferential region (208), and the third circumferential region (209);
a first flow passage IV (224) formed by the first sector region (201), the third circumferential region (209), and the fourth circumferential region (210);
a first flow passage V (225) formed by the first sector region (201), the fourth circumferential region (210), and the fifth circumferential region (211);
a second flow passage I (231) formed by the second sector region (202), the first circumferential region (207), and the second circumferential region (208);
a second flow passage II (232) formed by the second sector region (202), the second circumferential region (208), and the third circumferential region (209);
a second flow passage III (233) formed by the second sector region (202), the third circumferential region (209), and the fourth circumferential region (210);
a second flow passage IV (234) formed by the second sector region (202), the first circumferential region (207), and the fourth circumferential region (210);
a third flow passage I (241) formed by the third sector region (203) and the first circumferential region (207);
a third flow passage II (242) formed by the third sector region (203), the second circumferential region (208), and the third circumferential region (209);
a third flow passage III (243) formed by the third sector region (203), the fourth circumferential region (210), and the fifth circumferential region (211);
a fourth flow passage I (251) formed by the fourth sector region (204) and the first circumferential region (207);
a fourth flow passage II (252) formed by the fourth sector region (204), the second circumferential region (208), and the fourth circumferential region (210);
a fourth flow passage III (253) formed by the fourth sector region (204), the third circumferential region (209), and the fourth circumferential region (210);
a fifth flow passage I (261) formed by the fifth sector region (205) and the first circumferential region (207);
a fifth flow passage II (262) formed by the fifth sector region (205) and the third circumferential region (209);
a fifth flow passage III (263) formed by the fifth sector region (205), the second circumferential region (208), and the fifth circumferential region (211);
a fifth flow passage IV (264) formed by the fifth sector region (205), the fourth circumferential region (210), and the fifth circumferential region (211);
a sixth flow passage I (271) formed by the sixth sector region (206) and the first circumferential region (207);
a sixth flow passage II (272) formed by the sixth sector region (206), the second circumferential region (208), and the fifth circumferential region (211); and
a sixth flow passage III (273) formed by the sixth sector region (206), the third circumferential region (209), and the fourth circumferential region (210).

3. The multi-way valve according to claim 2, wherein
in the axial direction of the valve core (20), the first circumferential region (207), the second circumferential region (208), the third circumferential region (209), the fourth circumferential region (210), and the fifth circumferential region (211) have equal lengths; and
in the circumferential direction of the valve core (20), the first sector region (201), the second sector region (202), the third sector region (203), the fourth sector region (204), the fifth sector region (205), and the sixth sector region (206) have equal radians.

4. The multi-way valve according to claim 2, wherein
any one of the plurality of sector regions comprises two sector sub-regions distributed in the circumferential direction of the valve core (20), the two sector sub-regions have equal radians, any one of the two sector sub-regions and any one of the plurality of circumferential regions form a sub-cavity, all sub-cavities are divided into a first part and a second part, sub-cavities of the first part are independently arranged, and any one of sub-cavities of the second part is in communication with another one of the sub-cavities of the second part located within a same sector region, to form one of the flow passages.

5. The multi-way valve according to claim 1, wherein the operating conditions of the multi-way valve further comprise:
a seventh operating condition, in which the first sector region (201) and the second sector region (202) correspond to the plurality of the plurality of flow ports, the first flow port (001) is in communication with the ninth flow port (009) through the first sector region (201), the second flow port (002) is in communication with the tenth flow port (010) through the first sector region (201), the third flow port (003) is in communication with the eighth flow port (008) through the second sector region (202), and the fifth flow port (005) is in communication with the sixth flow port (006) through the second sector region (202);
an eighth operating condition, in which the second sector region (202) and the third sector region (203) correspond to the plurality of the flow ports, the first flow port (001) is in communication with the second flow port (002) through the second sector region (202), the ninth flow port (009) is in communication the tenth flow port (010) through the second sector region (202), the fifth flow port (005) is in communication with the third flow port (003) through the third sector region (203), and the eighth flow port (008) is in communication with the fourth flow port (004) through the third sector region (203);
a ninth operating condition, in which the third sector region (203) and the fourth sector region (204) correspond to the plurality of the flow ports, and the third flow port (003) is in communication with the eighth flow port (008) through the fourth sector region (204);
a tenth operating condition, in which the fourth sector region (204) and the fifth sector region (205) correspond to the plurality of the flow ports, and the eighth flow port (008) is in communication with the fourth flow port (004) through the fifth sector region (205);
an eleventh operating condition, in which the fifth sector region (205) and the sixth sector region (206) correspond to the plurality of the flow ports, the third flow port (003) is in communication with the eighth flow port (008) through the sixth sector region (206), and the fourth flow port (004) is in communication with the fifth flow port (005) through the sixth sector region (206); and
a twelfth operating condition, in which the sixth sector region (206) and the first sector region (201) correspond to the plurality of flow ports, the fifth flow port (005) is in communication with the third flow port (003) through the first sector region (201), and the eighth flow port (008) is in communication with the fourth flow port (004) through the first sector region (201).

6. The multi-way valve according to claim 5, wherein in the first operating condition, a rotation angle of the valve core (20) is set to be 0°, n is set to be a positive integer, and 0<n<12;
when the valve core (20) is rotated by n×30° and n is an even number, the multi-way valve is switched to any one of the second operating condition, the third operating condition, the fourth operating condition, the fifth operating condition, and the sixth operating condition; when the valve core (20) is rotated by 360°, the valve core (20) is rotated to return to the first operating condition; and
when the valve core (20) is rotated by n×30° and n is an odd number, the multi-way valve is switched to any one of the seventh operating condition, the eighth operating condition, the ninth operating condition, the tenth operating condition, the eleventh operating condition, and the twelfth operating condition.

7. The multi-way valve according to claim 2, wherein
the valve core (20) comprises a shaft sleeve (28), two circular end plates (291), a plurality of axial partition plates (292), and a plurality of sector partition plates (293), the shaft sleeve (28) comprises an outer sleeve body (281) and an inner sleeve body (282) arranged in the outer sleeve body (281), a plurality of internal flow passages (283) penetrating the valve core (20) in the axial direction of the valve core (20) are arranged between the inner sleeve body (282) and the outer sleeve body (281), the plurality of internal flow passages (283) correspond to the plurality of sector regions in a one-to-one manner, the two circular end plates (291) are arranged in parallel and fixedly connected to the outer sleeve body (281), and the two circular end plates (291) and the shaft sleeve (28) are coaxially arranged; and the plurality of axial partition plates (292) and the plurality of sector partition plates (293) are distributed in a region delimited by the two circular end plates (291) and the outer sleeve body (281), to obtain, through division, the plurality of sector regions and the plurality of circumferential regions.

8. The multi-way valve according to claim 1, wherein
the main body portion (10) comprises a valve body (11) and a sealing gasket (12) arranged in the valve body (11), a region enclosed by the valve body (11) and the sealing gasket (12) forms the valve cavity, and the plurality of the flow ports penetrate a bottom wall of the valve body (11) and the sealing gasket (12) to be in communication with the valve cavity; and
the plurality of flow ports are divided into two rows in a width direction of the valve body (11), one row of flow ports are sequentially the first flow port (001), the ninth flow port (009), the tenth flow port (010), the second flow port (002), and the seventh flow port (007) in a length direction of the valve body (11), the other row of flow ports are sequentially the sixth flow port (006), the fifth flow port (005), the third flow port (003), the eighth flow port (008), and the fourth flow port (004) in the length direction of the valve body (11), the plurality of flow ports in the two rows correspond to each other in a one-to-one manner, and the first flow port (001) and the sixth flow port (006) are spaced apart from each other in the width direction of the valve body (11).

9. The multi-way valve according to claim 8, wherein the sealing gasket (12) comprises a cambered flow gasket (121) and cambered blocking gaskets (122), which are connected to each other, the cambered blocking gaskets (122) are arranged on two sides of the cambered flow gasket (121) in the circumferential direction of the valve core (20), the cambered flow gasket (121) covers at least one of the sector regions to correspondingly form the two rows of flow ports, each of the cambered blocking gaskets (122) covers at least half of a sector region, and the each of the cambered blocking gaskets (122) is provided with a plurality of lightening holes (1221).

10. The multi-way valve according to claim 1, wherein the valve core (20) is demolded and has demolding locations, an outer surface of the valve core (20) movably matches, in a sealed manner, an inner wall of the valve cavity, and the outer surface of the valve core (20) is provided with a flash (30) at the demolding locations; and when the valve core (20) is rotated, a ring formed by the outer surface of the valve core (20) has a maximum radius of R1, a ring formed by an outer surface of the flash (30) has a maximum radius of R2, and R2<R1.

11. The multi-way valve according to claim 10, wherein the demolding locations comprise a plurality of axial demolding locations (212), the valve core (20) comprises a plurality of axial partition plates (292) distributed in the circumferential direction, and the axial demolding locations (212) extend in directions of the axial partition plates (292) and are located on outer surfaces of one side of the axial partition plates (292) away from an axis of the valve core (20); and a flash (30) located at each of the axial demolding locations (212) is arranged on an outer surface of a corresponding axial partition plate (292) in the circumferential direction of the valve core (20).

12. The multi-way valve according to claim 11, wherein the valve core (20) further comprises a plurality of sector partition plates (293), the plurality of sector partition plates (293) are distributed between two adjacent axial partition plates (292), outer surfaces of one side of the sector partition plates (293) away from the axis of the valve core (20) movably match, in a sealed manner, an inner wall of the valve cavity, and the flash (30) located at the each of the axial demolding locations (212) avoids an outer surface of a corresponding sector partition plate of the sector partition plates (293).

13. The multi-way valve according to claim 10, wherein the demolding locations comprise two circumferential demolding locations (213), the valve core (20) comprises circular end plates (291) located at two ends, the circumferential demolding locations (213) extend in circumferential directions of the circular end plates (291) and are located on outer surfaces of a side of the circular end plates (291) away from an axis of the valve core (20), and a flash (30) located at each of the circumferential demolding locations (213) is arranged on an outer surface of a corresponding circular end plate (291) in an axis direction of the valve core (20).

14. The multi-way valve according to claim 1, wherein the valve core (20) is made of plastic, and the valve core (20) is injection-molded.
